# EUROPÄISCHE PATENTSCHRIFT

(11) **EP 2 213 910 B1**
(45) Veröffentlichungstag und Bekanntmachung des Hinweises auf die Patenterteilung: **18.01.2012**
(21) Anmeldenummer: 10000949.7
(22) Anmeldetag: 29.01.2010
(51) Int. Cl.: F16H 61/02, B60W 10/10, F16H 47/02, F16H 59/44, F16H 59/48, F16H 59/46

(54) **Verfahren und Vorrichtung zum Wechseln von Gängen eines hydrostatisch angetriebenen Mehrganggetriebes**
Method and device for changing the gears of a hydrostatically driven multiple gear gearbox
Procédé et dispositif de changement de vitesses d'une boîte de vitesse hydrostatique

(30) Priorität: 29.01.2009 DE 102009006468
(43) Veröffentlichungstag der Anmeldung: 04.08.2010
(73) Patentinhaber: Robert Bosch GmbH, 70442 Stuttgart (DE)
(72) Erfinder: Riggenmann, Frank, 89284 Pfaffenhofen (DE); Miller, Matthias, 88416 Steinhausen (DE); Brand, Michael, 89075 Ulm (DE)
(74) Vertreter: Beder, Jens

(56) Entgegenhaltungen:
- EP-A2- 1 114 948
- DE-A1- 10 354 196
- US-A- 4 939 954
- US-A1- 2007 032 341
- US-B1- 6 182 000

## Beschreibung

Die Erfindung betrifft ein Verfahren und eine Vorrichtung zum Wechseln von Gängen eines von einem hydrostatischen Getriebe angetriebenen Mehrganggetriebes.

Aus der Druckschrift DE 101 33 358 B4 ist ein hydrostatischer Antrieb mit nachgeschaltetem Schaltgetriebe gezeigt. Mittels eines elektronischen Steuergeräts kann das Übersetzungsverhältnis des Schaltgetriebes angesteuert werden. Das elektronische Steuergerät ist zwar über diverse Auswahlschalter, Hebel und Pedale ansteuerbar; ein Vermeiden unerwünschter Schaltvorgänge ist jedoch nicht gezeigt.

Die US 49 399 54 zeigt ein Verfahren zum Schalten von Gängen in einem Mehrganggetriebes, das von einen hydrostalischen Getriebe angetrieben wird, auf der Basis eines Vergleichs der Ist-Fahrgeschurinligkeit und der Ist-übersetzung im hydrostatischen Antried mit Grenzwerten

Der Erfindung liegt daher die Aufgabe zugrunde, ein Verfahren und eine Vorrichtung zum Wechseln von Gängen eines von einem hydrostatischen Getriebe angetriebenen Mehrganggetriebes zu schaffen, mit dem unerwünschte Schaltvorgänge vermieden werden.

Die Aufgabe wird durch das erfindungsgemäße Verfahren gemäß Anspruch 1 und das erfindungsgemäße Steuergerät gemäß Anspruch 5 gelöst.

Das erfindungsgemäße Steuergerät ist zum Ausführen des erfindungsgemäßen Verfahrens geeignet ausgeführt.

Das erfindungsgemäße Steuergerät für ein hydrostatisch angetriebenes Mehrganggetriebe umfasst eine Gangermittlungseinrichtung zum Ermitteln eines aktuell eingelegten Gangs, eine Grenzwertermittlungseinrichtung zum Ermitteln eines Mindestwerts und eines Höchstwerts, einer Geschwindigkeitskenngröße, welche jeweils mit dem eingelegten Gang assoziiert sind. Es ist eine Geschwindigkeitsermittlungseinrichtung zum Ermitteln eines aktuell vorliegenden Ist-Geschwindigkeitskenngrößenwerts, eine erste Vergleichseinrichtung zum Vergleichen des Ist-Geschwindigkeitskenngrößenwerts mit dem Mindestwert und dem Höchstwert und eine Vorgabeermittlungseinrichtung zum Ermitteln eines Soll-Geschwindigkeitskenngrößenwerts vorgegeben. Eine zweite Vergleichseinrichtung vergleicht den Ist-Geschwindigkeitskenngrößenwert mit dem Soll-Geschwindigkeitskenngrößenwert. Eine Zustandsermittlungseinrichtung ermittelt einen weiteren Ist-Werts und eine Schwellwertermittlungseinrichtung ermittelt einen mit dem weiteren Ist-Wert assoziierten Schwellenwert. Eine dritte Vergleichseinrichtung vergleicht den weiteren Ist-Wert mit dem assoziierten Schwellenwert und eine Befehlsermittlungseinrichtung ermittelt einen von dem Ist-Geschwindigkeitskenngrößenwert, dem Soll-Geschwindigkeitskenngrößenwert, einem Ergebnis des Vergleichs der Ist-Geschwindigkeit mit dem Mindestwert und dem Höchstwert und einem Ergebnis des Vergleichs des weiteren Ist-Werts mit dem assoziierten Schwellenwert abhängigen Schaltbefehl. Der Schaltbefehl wird durch eine Ausgabeeinrichtung ausgegeben.

Durch das Ermitteln eines von dem Ist-Geschwindigkeitskenngrößenwert, dem Soll-Geschwindigkeitskenngrößenwert, einem Ergebnis des Vergleichs der Ist-Geschwindigkeit mit dem Mindestwert und dem Höchstwert und einem Ergebnis des Vergleichs des weiteren Ist-Werts mit dem assoziierten Schwellenwert abhängigen Schaltbefehls können unerwünschte Schaltvorgänge vermieden werden. Die Art der Ermittlung und die Schaltkriterien können den Bedürfnissen angepasst werden. Diese können z.B. von einem durch z.B. einen Benutzer wählbaren Fahrmodus abhängen.

Jedem Gang ist in einem bestimmten Fahrmodus ein Geschwindigkeitsfenster zugeordnet, welcher durch den Höchstwert nach oben hin und den Mindestwert nach unten hin begrenzt ist. Höchstwert und Mindestwert können in jedem Gang individuell von dem eingestellten Fahrmodus abhängen. Es wird ermittelt, ob die Ist-Geschwindigkeit innerhalb oder außerhalb des Geschwindigkeitsfensters des einzelnen Ganges liegt. Liegt die Ist-Geschwindigkeit innerhalb des Geschwindigkeitsfensters, wird kein Schaltbefehl ausgegeben. Liegt die Ist-Geschwindigkeit dagegen außerhalb des Geschwindigkeitsfensters, kann ein Schaltbefehl ausgegeben werden. Als Schaltbefehl kann ein Hochschaltbefehl oder ein Herunterschaltbefehl verwendet werden. Ein Hochschaltbefehl kommt nur in Frage, wenn die Ist-Geschwindigkeit den Höchstwert überschreitet. Ein Herunterschaltbefehl kommt nur in Frage, wenn die Ist-Geschwindigkeit den Mindestwert unterschreitet. Ob ein Schaltbefehl tatsächlich ausgegeben wird, hängt von der Erfüllung weiterer Bedingungen ab. Dazu wird erfindungsgemäß die Erfüllung weiterer Bedingungen überprüft.

In einer Ausführung sind die Zustandsermittlungseinrichtung und die Schwellwertermittlungseinrichtung so ausgebildet, dass die Zustandsermittlungseinrichtung eine Ist-Beschleunigung als weiteren Ist-Wert und die Schwellwertermittlungseinrichtung eine Mindest-Beschleunigung als assoziierten Schwellewert verwenden, wenn die Ist-Geschwindigkeit kleiner als der Mindestwert ist und die Ist-Geschwindigkeit kleiner als die Soll-Geschwindigkeit ist. In diesem Ausführungsbeispiel ist die Ausgabeeinrichtung so ausgebildet, dass die Ausgabeeinrichtung einen Herunterschaltbefehl als Schaltbefehl verwendet, wenn zudem die Ist-Beschleunigung kleiner als die Mindest-Beschleunigung ist.

In einem weiteren Ausführungsbeispiel sind die Zustandsermittlungseinrichtung und die Schwellwertermittlungseinrichtung so ausgebildet, dass die Zustandsermittlungseinrichtung eine Ist-Übersetzung des hydrostatischen Getriebes als weiteren Ist-Wert und die Schwellwertermittlungseinrichtung eine Mindestübersetzung als assoziierten Schwellenwert verwenden, wenn die Ist-Geschwindigkeit größer als der Höchstwert ist und die Ist-Geschwindigkeit kleiner als die Soll-Geschwindigkeit ist. In diesem weiteren Ausführungsbeispiel ist die Ausgabeeinrichtung so ausgebildet, dass die Ausgabeeinrichtung einen Hochschaltbefehl als Schaltbefehl verwendet, wenn zudem die Ist-Übersetzung größer als die Mindestübersetzung ist.

In den Unteransprüchen sind vorteilhafte Ausführungsformen des erfindungsgemäßen Verfahrens bzw. der erfindungsgemäßen Vorrichtung dargestellt..

Vorzugsweise umfasst das Steuergerät eine Fahrmodusermittlungseinrichtung zum Ermitteln eines Fahrmodus, wobei die Befehlsermittlungseinrichtung den Schaltbefehl dann abhängig von dem Fahrmodus ermittelt. Z.B. kann der Fahrmodus den Höchstwert und/oder den Mindestwert des Geschwindigkeitsfensters eines Gangs unterschiedlich festlegen. Ob ein Schaltvorgang erwünscht ist oder nicht und ob ein Schaltvorgang erlaubt ist oder nicht, hängt von dem Geschwindigkeitsfenster ab.

Dadurch, dass die Befehlsermittlungseinrichtung den Schaltbefehl abhängig von dem Fahrmodus ermittelt, können in einem Fahrmodus unerwünschte Schaltvorgänge, welche in einem anderen Fahrmodus erwünscht wären, vermieden werden, bzw. in einem Fahrmodus erwünschte Schaltvorgänge, welche in einem anderen Fahrmodus unerwünscht wären, zugelassen werden. Durch Auswahl eines zur Ermittlung herangezogenen Geschwindigkeitsfensters für den eingelegten Gang über den Fahrmodus können bestimmte Schaltvorgänge vorab unterbunden oder erlaubt werden.

In einem bevorzugten Ausführungsbeispiel verwendet die Zustandsermittlungseinrichtung eine Ist-Beschleunigung als weiteren Ist-Wert und die Schwellwertermittlungseinrichtung eine Mindest-Beschleunigung als assoziierten Schwellenwert, wenn die Ist-Geschwindigkeit kleiner als der Mindestwert ist und die Ist-Geschwindigkeit kleiner als die Soll-Geschwindigkeit ist. Die Ausgabeeinrichtung gibt einen Herunterschaltbefehl als Schaltbefehl aus, wenn zudem die Ist-Beschleunigung kleiner als die Mindest-Beschleunigung ist.

Durch das Ermitteln eines Betriebszustandszustands, welcher durch die Ist-Geschwindigkeit und die Ist-Beschleunigung dargestellt wird, und eines Betriebwunsches, welcher durch die Soll-Geschwindigkeit dargestellt wird, kann ermittelt werden, ob ein möglicher Herunterschaltvorgang erwünscht oder unerwünscht ist. Unerwünschte Herunterschaltvorgänge können auf dieser Grundlage vermieden und nur erwünschte Herunterschaltvorgänge durchgeführt werden.

In einem weiteren bevorzugten Ausführungsbeispiel verwenden die Zustandsermittlungseinrichtung eine Ist-Übersetzung als weiteren Ist-Wert und die Schwellwertermittlungseinrichtung eine Mindestübersetzung als assoziierten Schwellenwert, wenn die Ist-Geschwindigkeit größer als der Höchstwert ist und die Ist-Geschwindigkeit kleiner als die Soll-Geschwindigkeit ist und die Ausgabeeinrichtung eine Hochschaltbefehl als Schaltbefehl, wenn zudem die Ist-Übersetzung größer als die Mindestübersetzung ist.

Dadurch können die einzelnen Schritte eines weiteren bevorzugten Ausführungsbeispiels des erfindungsgemäßen Verfahrens durchgeführt werden. Durch das Ermitteln eines Betriebszustandszustands, welcher durch die Ist-Geschwindigkeit und die Ist-Übersetzung dargestellt wird, und eines Betriebswunsches, welcher durch die Soll-Geschwindigkeit dargestellt wird, kann erkannt werden, ob ein möglicher Hochschaltvorgang erwünscht oder unerwünscht ist. Unerwünschte Hochschaltvorgänge können auf dieser Grundlage vermieden und erwünschte Hochschaltvorgänge durchgeführt werden.

Bevorzugte Ausführungsbeispiele des erfindungsgemäßen Verfahrens bzw. der erfindungsgemäßen Vorrichtung sind in der Zeichnung dargestellt und werden in der nachfolgenden Beschreibung detailliert erläutert. Es zeigen:
- Fig. 1: einen hydrostatischen Fahrantrieb mit dem erfindungsgemäßen Steuergerät zur Durchführung des erfindungsgemäßen Verfahrens;
- Fig. 2: einen schematischen Aufbau eines erfindungsgemäßen Steuergeräts; und
- Fig. 3: ein Flussdiagramm eines erfindungsgemäßen Verfahrens.

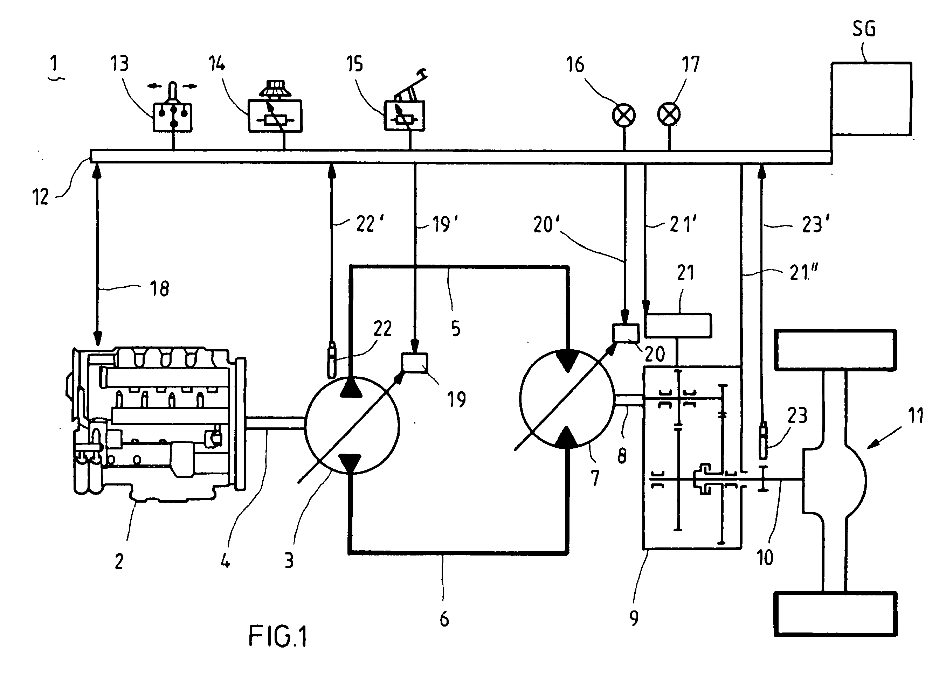

Fig. 1 zeigt einen Fahrantrieb 1 mit einem hydrostatisch angetriebenen Mehrganggetriebe 9. Der Fahrantrieb 1 umfasst eine Antriebsmaschine 2, welche im dargestellten Ausführungsbeispiel ein Dieselmotor ist, eine verstellbar ausgeführte Hydropumpe 3 einen verstellbar ausgeführten Hydromotor 7, das Mehrganggetriebe 9 und eine Antriebsachse 11. Die Hydropumpe 3 und der Hydromotor 7 bilden ein hydrostatisches Getriebe mit einstellbarem Übersetzungsverhältnis. Die Hydropumpe 3 und die Antriebsmaschine 2 sind über eine Antriebswelle 4, welche Drehmoment von der Antriebsmaschine 2 auf die Hydropumpe 3 überträgt, miteinander verbunden. Die Hydropumpe 3 und der Hydromotor 7 sind über eine erste Arbeitsleitung 5 und eine zweite Arbeitsleitung 6 miteinander verbunden und bilden auf diese Weise einen geschlossen Kreislauf. Der Hydromotor 7 wiederum ist mit dem Mehrganggetriebe 9 über eine erste Abtriebswelle 8 verbunden, welche Drehmoment von dem Hydromotor 7 auf das Mehrganggetriebe 9 überträgt. Das Mehrganggetriebe 9 ist mit einer Antriebsachse 11 über eine zweite Abtriebswelle 10 verbunden. Die Abtriebswelle 10 überträgt Drehmoment von dem Mehrganggetriebe 9 auf die Antriebsachse 11.

Zur Steuerung des hydrostatischen Fahrantriebs 1 umfasst der hydrostatische Fahrantrieb 1 ein Bus-System 12, vorzugsweise ein CAN-Bus, mit dem Bedienelemente, Anzeigeelemente, Steuerelemente, Messvorrichtungen und ein Steuergerät SG verbunden sind.

Als Bedienelemente sind ein Fahrtrichtungs-Auswahlschalter 13, eine Fahrgeschwindigkeits-Vorgabeeinrichtung 15 und ein Funktionsauswahl-Bedienelement 14 mit dem Bus-System 12 verbunden. Durch den Fahrtrichtungs-Auswahlschalter 13 kann ein Benutzer eine gewünschte Fahrtrichtung vorgeben. Durch die Fahrgeschwindigkeits-Vorgabeeinrichtung 15 kann ein Benutzer z.B. eine gewünschte Fahrgeschwindigkeit vorgeben. Durch das Funktionsauswahl-Bedienelement 14 kann ein Benutzer z.B. einen gewünschten Fahrmodus vorgeben. Vorzugsweise ist die Fahrgeschwindigkeits-Vorgabeeinrichtung 15 ein Fahrpedal. Über die Fahrpedalstellung kann ein Benutzer eine gewünschte Fahrgeschwindigkeit vorgeben.

Als Anzeigeelemente sind eine erste Anzeige 16 und eine zweite Anzeige 17 mit dem Bus-System 12 verbunden. Die Anzeigen 16, 17 geben an, ob ein Gang eingelegt ist und falls ja, welcher Gang eingelegt ist.

Als Steuervorrichtungen sind eine Hydropumpen-Stellvorrichtung 19 über eine erste Verbindung 19', eine Hydromotor-Stellvorrichtung 20 über eine zweite Verbindung 20' und eine Schaltgetriebe-Steuervorrichtung 21 über eine dritte Verbindung 21' mit dem Bus-System 12 verbunden. Als Messvorrichtungen sind ein Drucksensor 22 über eine vierte Verbindung 22' und ein Drehzahlsensor 23 über eine fünfte Verbindung 23' mit dem Bus-System 12 verbunden. Die Hydropumpen-Stellvorrichtung 19 steuert den Schwenkwinkel der Hydropumpe 3. Die Hydromotor-Stellvorrichtung 20 steuert den Schwenkwinkel des Hydromotors 7. Die Schaltgetriebe-Steuervorrichtung 21 steuert Gangwechsel an. Eine Getriebeverbindung 21" verbindet das Mehrganggetriebe 9 mit dem Bus-System 12 und liefert Information über den aktuell eingelegten Gang.

Der Drucksensor 22 gibt den gemessenen Arbeitsdruck in dem geschlossenen Kreislauf an. Der Drehzahlsensor 23 gibt die gemessene Drehzahl der zweiten Abtriebswelle 10 bzw. eine mit dieser assoziierten Geschwindigkeitskenngröße an.

Das Bus-System 12 ist über die Antriebsmaschinenverbindung 18 mit der Antriebsmaschine 2 verbunden. Dadurch kann der Betriebszustand der Antriebsmaschine 2 von dem Bus-System 12 aus angesteuert bzw. an das Bus-System 12 vermittelt werden.

Das Steuergerät SG, welches ebenfalls mit dem Bus-System 12 verbunden ist, ist somit mit allen weiteren an das Bus-System 12 verbundenen Bedienelementen, Anzeigeelementen, Steuerelementen und Messvorrichtungen sowie der Antriebsmaschine 2 verbunden. Das Steuergerät SG kann somit mit allen mit dem Bus-System 12 verbundenen Elementen kommunizieren und diese abfragen und/oder ansteuern. Aufgenommene Signale von signalgebenden Elementen können verarbeitet werden, um Steuersignale an signalverarbeitende und/oder -anzeigende Elemente auszugeben. Insbesondere steuert das Steuergerät SG in einem Ausführungsbeispiel auf der Grundlage der Signale des Fahrtrichtungs-Auswahlschalters 13, der Fahrgeschwindigkeits-Vorgabeeinrichtung 15, des Funktionsauswahl-Bedienelements 14, des Drucksensors 22 und des Drehzahlsensors 23 die Schaltgetriebe-Steuervorrichtung 21 über die dritte Verbindung 21'. Dadurch können erwünschte Gangwechsel von unerwünschten Gangwechseln unterschieden werden und erwünschte Gangwechsel durchgeführt und unerwünschte Gangwechsel vermieden werden. Die Unterscheidung zwischen erwünschten Gangwechseln von unerwünschten Gangwechseln kann von dem Fahrmodus, welcher durch das Funktionsauswahl-Bedienelement 14 einstellbar ist, abhängen.

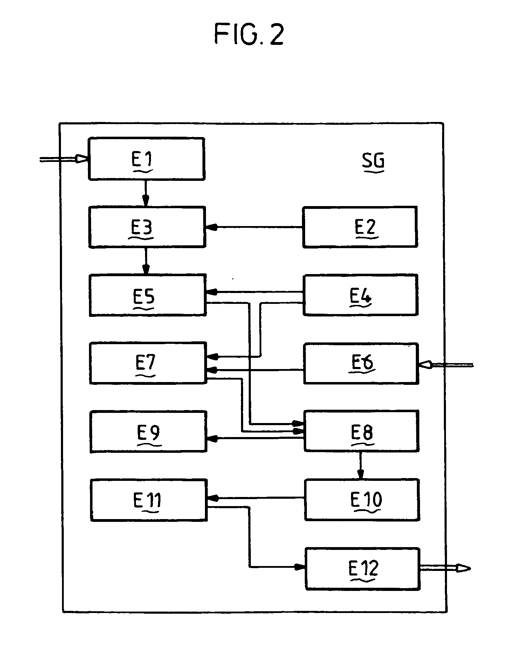

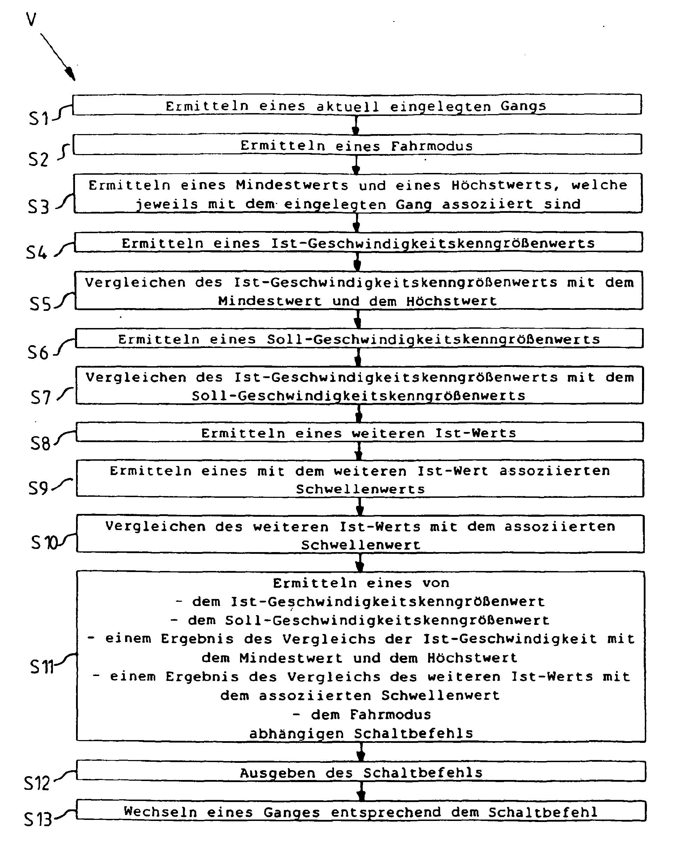

Fig. 2 zeigt einen schematischen Aufbau eines erfindungsgemäßen Steuergeräts SG, welches zum Ausführen eines in Fig. 3 dargestellten erfindungsgemäßen Verfahrens V geeignet ausgebildet ist. 5. Das Steuergerät SG umfasst mehrere Einrichtungen, welche als separate Einheiten und/oder zu größeren Einheiten gruppiert operieren können, welche jeweils miteinander verbunden sind. Obwohl alle Einrichtungen E1 - E12 jeweils untereinander verbunden sind, sind in Fig. 2 zwischen einigen Einrichtungen zur Verdeutlichung des Informationsflusses Pfeile dargestellt. Die Pfeile geben an, an welche Einrichtung eine Einrichtung die ihr übermittelte und/oder in ihr erzeugte Information weitergibt.

In dem dargestellten Ausführungsbeispiel umfasst das Steuergerät eine Gangermittlungseinrichtung E1 zum Ermitteln S1 eines aktuell eingelegten Gangs. Jeder Gang hat ein spezifisches Geschwindigkeitsintervall, welches durch einen spezifischen Höchstwert und einen gang- und fahrmodusspezifischen Mindestwert begrenzt ist. Das Intervall, der Höchstwert und der Mindestwert beziehen sich auf eine Geschwindigkeitskenngröße wie z.B. eine Geschwindigkeit oder eine Drehzahl. Mittels des Intervalls, des Höchstwerts und des Mindestwerts wird definiert, in welchen Bereichen der Geschwindigkeitskenngröße ein Schalten erwünscht (Geschwindigkeitskenngröße ist außerhalb des Intervalls) oder unerwünscht (Geschwindigkeitskenngröße ist innerhalb des Intervalls) ist und in welchen Bereichen ein Hochschalten (Geschwindigkeitskenngröße ist über dem Höchstwert) oder ein Herunterschalten (Geschwindigkeitskenngröße ist unterhalb des Mindestwerts) möglich ist.

Das Steuergerät SG umfasst ferner eine Fahrmodusermittlungseinrichtung E2 zum Ermitteln S2 eines Fahrmodus. Der Fahrmodus ist wählbar. Die gangspezifischen Intervalle können zumindest teilweise (Höchstwert und/oder Mindestwert) von dem gewählten Fahrmodus abhängen. Die Fahrmodusermittlungseinrichtung E2 ist jedoch optional und nicht zwingender Bestandteil des erfindungsgemäßen Steuergeräts SG.

Das Steuergerät SG umfasst zudem eine Grenzwertermittlungseinrichtung E3 zum Ermitteln des Mindestwerts und des Höchstwerts, welche jeweils mit dem eingelegten Gang assoziiert sind und das gangspezifische Intervall festlegen. Mithilfe des Mindestwertes und des Höchstwerts kann ermittelt werden, ob ein Gangwechsel erwünscht ist oder nicht. Der Mindestwert und der Höchstwert können je nach Ausführungsbeispiel von dem Fahrmodus abhängen.

Das Steuergerät SG umfasst darüber hinaus eine Geschwindigkeitsermittlungseinrichtung E4 zum Ermitteln S4 eines Ist-Geschwindigkeitskenngrößenwerts, die bevorzugt aus einer gemessenen Abtriebsdrehzahl bestimmt wird. Dadurch kann ein Betriebszustand ermittelt werden, auf dessen Grundlage ermittelt wird, ob ein Gangwechsel erwünscht ist oder nicht.

Das Steuergerät SG umfasst ferner eine erste Vergleichseinrichtung E5 zum Vergleichen S5 des Ist-Geschwindigkeitskenngrößenwerts mit dem Mindestwert und dem Höchstwert. Der Vergleich liefert ein erstes Ergebnis, welches darüber Auskunft gibt, ob der Ist-Geschwindigkeitskenngrößenwert kleiner als der Mindestwert, größer als der Höchstwert oder weder kleiner als der Mindestwert noch größer als der Höchstwert ist. Auf diese Weise ist es möglich zu erkennen, ob ein Hochschalten oder ein Herunterschalten als Gangwechsel erwünscht ist oder nicht. In einem solchen Fall können der der Höchstwert und der Mindestwert jeweils je nach Ausführungsbeispiel von dem Fahrmodus abhängen. Es kann je nach Ausführungsbeispiel auch ermittelt werden, ob der Ist-Geschwindigkeitskenngrößenwert kleiner als der Mindestwert plus oder minus ein erster Summand, größer als der Höchstwert plus oder minus ein zweiter Summand oder weder kleiner als der Mindestwert plus oder minus dem ersten Summanden noch größer als der Höchstwert plus oder minus dem zweiten Summanden ist. In einem solchen Fall können der erste und der zweite Summand jeweils je nach Ausführungsbeispiel von dem Fahrmodus abhängen.

Das Steuergerät SG umfasst zudem eine Vorgabeermittlungseinrichtung E6 zum Ermitteln S6 eines Soll-Geschwindigkeitskenngrößenwerts. Ein Soll-Geschwindigkeitskenngrößenwert wird extern vorgegeben, z.B. durch eine Geschwindigkeitsvorgabeeinrichtung. Durch das Ermitteln des Soll-Geschwindigkeitskenngrößenwerts wird ein erwünschter Betriebszustand ermittelt, auf dessen Grundlage ermittelt wird, ob ein Gangwechsel erwünscht ist oder nicht.

Das Steuergerät SG umfasst ferner eine zweite Vergleichseinrichtung E7 zum Vergleichen S7 des Ist-Geschwindigkeitskenngrößenwerts mit dem Soll-Geschwindigkeitskenngrößenwerts. Der Vergleich liefert ein zweites Ergebnis, welches darüber Auskunft gibt, ob der Ist-Geschwindigkeitskenngrößenwert kleiner oder größer als der Soll-Geschwindigkeitskenngrößenwert ist. Auf diese Weise ist es möglich zu erkennen, ob ein Hochschalten oder ein Herunterschalten als Gangwechsel sinnvoll ist oder nicht. Es wird je nach Ausführungsbeispiel auch ermittelt, ob der Ist-Geschwindigkeitskenngrößenwert kleiner oder größer als der Soll-Geschwindigkeitskenngrößenwert plus oder minus des Summands ist. Der Summand hängt von dem Fahrmodus ab.

Das Steuergerät SG umfasst darüber hinaus eine Zustandsermittlungseinrichtung E8 zum Ermitteln S8 eines weiteren Ist-Werts. Dadurch wird ein weiter spezifizierter Betriebszustand ermittelt, auf dessen Grundlage ermittelt wird, ob ein Gangwechsel erwünscht ist oder nicht.

Das Steuergerät SG umfasst ferner eine Schwellwertermittlungseinrichtung E9 zum Ermitteln S9 eines mit dem weiteren Ist-Wert assoziierten Schwellenwerts. Auf der Grundlage des assoziierten Schwellenwerts wird ermittelt, ob ein Gangwechsel überhaupt sinnvoll ist oder nicht. Auch der assoziierte Schwellenwert hängt je nach Ausführungsbeispiel von dem Fahrmodus ab.

Das Steuergerät SG umfasst zudem eine dritte Vergleichseinrichtung E10 zum Vergleichen S10 des weiteren Ist-Werts mit dem assoziierten Schwellenwert. Der Vergleich liefert ein drittes Ergebnis, welches darüber Auskunft gibt, ob der weitere Ist-Wert kleiner oder größer als der assoziierte Schwellenwert ist oder diesem gleich. Auf der Grundlage dieses Vergleichs wird ermittelt, ob ein Gangwechsel durchgeführt werden soll oder nicht.

Das Steuergerät SG umfasst darüber hinaus eine Befehlsermittlungseinrichtung E11 zum Ermitteln S11 eines von dem Ist-Geschwindigkeitskenngrößenwert, dem Soll-Geschwindigkeitskenngrößenwert, dem Ergebnis des Vergleichs der Ist-Geschwindigkeit mit dem Mindestwert und dem Höchstwert und dem Ergebnis des Vergleichs des weiteren Ist-Werts mit dem assoziierten Schwellenwert dem Fahrmodus abhängigen Schaltbefehls. Die Befehlsermittlungseinrichtung E11 zum Ermitteln S11 des Schaltbefehls kann auch von dem Ergebnis des Vergleichs von Ist-Geschwindigkeitskenngrößenwert und Soll-Geschwindigkeitskenngrößenwert abhängen, welches von der zweiten Vergleichseinrichtung E7 ermittelt wird.

Das Steuergerät SG umfasst zudem eine Ausgabeeinrichtung E12 zum Ausgeben S12 des Schaltbefehls, welcher je nach Fall ein Herunterschaltbefehl oder ein Hochschaltbefehl ist. Auf der Grundlage des Schaltbefehls kann der Gang gewechselt werden S12. Im Regelfall wird entsprechend dem Schaltbefehl nur ein Gang hoch bzw. herunter geschaltet.

In einem ersten Ausführungsbeispiel verwendet die Ausgabeeinrichtung E13 als Schaltbefehl einen Herunterschaltbefehl. In einem zweiten Ausführungsbeispiel verwendet die Ausgabeeinrichtung E11 als Schaltbefehl einen Hochschaltbefehl.

In dem ersten speziellen Ausführungsbeispiel sind die Zustandsermittlungseinrichtung E8 und die Schwellwertermittlungseinrichtung E10 so ausgebildet, dass die Zustandsermittlungseinrichtung E8 eine Ist-Beschleunigung als weiteren Ist-Wert und die Schwellwertermittlungseinrichtung E10 eine Mindest-Beschleunigung als assoziierten Schwellewert verwenden, wenn die Ist-Geschwindigkeit kleiner als der Mindestwert ist und die Ist-Geschwindigkeit kleiner als die Soll-Geschwindigkeit ist. In diesem ersten speziellen Ausführungsbeispiel ist die Ausgabeeinrichtung E12 so ausgebildet, dass die Ausgabeeinrichtung E12 einen Herunterschaltbefehl als Schaltbefehl verwendet, wenn zudem die Ist-Beschleunigung kleiner als die Mindest-Beschleunigung ist.

In dem zweiten speziellen Ausführungsbeispiel sind die Zustandsermittlungseinrichtung E8 und die Schwellwertermittlungseinrichtung E10 so ausgebildet, dass die Zustandsermittlungseinrichtung E8 eine Ist-Übersetzung als weiteren Ist-Wert und die Schwellwertermittlungseinrichtung E10 eine Mindestübersetzung als assoziierten Schwellenwert verwenden, wenn die die Ist-Geschwindigkeit größer als der Höchstwert ist und die Ist-Geschwindigkeit kleiner als die Soll-Geschwindigkeit ist. In diesem zweiten speziellen Ausführungsbeispiel ist die Ausgabeeinrichtung E12 so ausgebildet, dass die Ausgabeeinrichtung E12 einen Hochschaltbefehl als Schaltbefehl verwendet, wenn zudem die Ist-Übersetzung größer als die Mindestübersetzung ist.

Anstelle nur eines weiteren Ist-Werts kann die Zustandsermittlungseinrichtung E8 mehrere zumindest zum Teil verschiedene Ist-Werte Ermitteln S8, zu denen die Schwellenwertermittlungseinrichtung E9 jeweils einen assoziierten Schwellenwert ermittelt S9 und zuordnet. Auf der Grundlage der so ermittelten Wertepaare lassen sich weitere Schaltkriterien bzw. Schaltbedingungen formulieren. Diese können von der Befehlsermittlungseinrichtung E11 beim Ermitteln S11 eines Schaltbefehls berücksichtigt oder z.B. im Falle von Fehlfunktionen alternativ verwendet werden.

Die Ist-Werte beziehen sich auf verschiedene variable Größen des hydrostatischen Fahrantriebs 1. Z.B. können Drehzahlen und/oder Drehmomente der Antriebsmaschine 2, der Hydropumpe 3, des Hydromotors 7 und/oder der entsprechenden Achsen 4, 8 herangezogen werden. Auch kann ein Systemdruck im hydrostatischen Fahrantrieb 1 herangezogen werden. Dazu können jeweils Sensoren mit den entsprechenden Stellen im hydrostatischen Fahrantrieb 1 und dem Bus-System 12 verbunden sein. Auf dieser Grundlage können zusätzlich Wirkungsgradkennlinien für die Antriebsmaschine 2 und/oder dem geschlossen Kreislauf beim Ermitteln von Schaltbefehlen (E11, S11) berücksichtigt werden.

Als Fahrmodi können z.B. ein verbrauchsoptimierter Fahrmodus (ECO-Mode), ein beschleunigungs- bzw. drehzahloptimierter Fahrmodus oder ein fahrkomfortoptimierter Fahrmodus gewählt werden. Für eine verbrauchsoptimierte Fahrweise wird darauf Wert gelegt, dass ein Hochschalten schon bei relativ niedrigen Fahrgeschwindigkeiten bzw. Drehzahlen der Antriebsmaschine erfolgen kann.

Vorzugsweise verwendet die Zustandsermittlungseinrichtung E8 eine Ist-Beschleunigung als weiteren Ist-Wert und die Schwellwertermittlungseinrichtung E9 eine Mindest-Beschleunigung als assoziierten Schwellewert, wenn die Ist-Geschwindigkeit kleiner als der Mindestwert ist und die Ist-Geschwindigkeit kleiner als die Soll-Geschwindigkeit ist und die Ausgabeeinrichtung E12 einen Herunterschaltbefehl als Schaltbefehl, wenn zudem die Ist-Beschleunigung kleiner als die Mindest-Beschleunigung ist.

Grundsätzlich wird also anhand der aus der Bedienung der Fahrgeschwindigkeits-Vorgabeeinrichtung 15 ermittelten Soll-Geschwindigkeit überprüft, ob ein Herunterschalten in Frage kommt.

Beträgt die aktuelle Ist-Geschwindigkeit mindestens einen der Fahrpedalstellung bzw. der Bedienung der Fahrgeschwindigkeits-Vorgabeeinrichtung 15 entsprechenden Soll- Geschwindigkeit, so wird ein Herunterschalten unterdrückt. Liegt die aktuelle Ist-Geschwindigkeit unterhalb des durch die Fahrpedalstellung bzw. der Bedienung des Fahrgeschwindigkeits-Bedienelements 15 vorgegebene Soll-Geschwindigkeit, das Fahrzeug jedoch bereits eine bestimmte Mindest-Beschleunigung aufweist, so ist ein Herunterschalten ebenfalls unterdrückbar oder unterdrückt. Ein Herunterschalten wird in oben genannten entsprechenden Fällen also nur dann initiiert, wenn die aktuelle Fahrgeschwindigkeit nicht mindestens dem SollWert entspricht und zugleich die Fahrzeugbeschleunigung unterhalb eines bestimmten Mindestwerts liegt.

Vorzugsweise verwenden die Zustandsermittlungseinrichtung E8 eine Ist-Übersetzung als weiteren Ist-Wert und die Schwellwertermittlungseinrichtung E9 eine Mindestübersetzung als assoziierten Schwellenwert, wenn die Ist-Geschwindigkeit größer als der Höchstwert ist und die Ist-Geschwindigkeit kleiner als die Soll-Geschwindigkeit ist und die Ausgabeeinrichtung eine Hochschaltbefehl als Schaltbefehl verwendet, wenn zudem die Ist-Übersetzung größer als die Mindestübersetzung ist.

Dadurch erlaubt die Erfindung die Realisierung folgender Vorteile:

Beim Ausrollen kommt es zu keinen unerwünschten Schaltvorgängen mehr, da für den Schaltvorgang eine Bestimmte Mindestpedalstellung erforderlich ist.

Bei ausbleibender Beschleunigung wird über das Fahrpedalund Geschwindigkeitssignal erkannt, ob ein Zurückschalten erforderlich ist.

Bei erhöhtem Zugkraftbedarf, wird soweit erforderlich, automatisch zurück geschaltet. Dies kann beispielsweise das Einfahren in eine Steigung oder in ein Haufwerk sein.

Bei erwünschter aggressiver Beschleunigung wird automatisch eine Gangstufe zurückgeschaltet, ähnlich dem Kickdown bei PKW-Automatikgetrieben.

Bei ausreichend starker Beschleunigung im aktiven Gang kommt es zu keinem Herunterschalten. Dies kann insbesondere bei Getrieben mit Zugkraftunterbrechung von großem Vorteil sein.

Schaltvorgänge mit schlechten Randbedingungen können durch die automatische Schaltstrategie ausgeschlossen werden. Schlechte Randbedingungen können z.B. bei "Shift on Fly" Anwendung ein nicht ausreichend hoher Systemdruck sein, was mit verlängerten Schaltzyklen verbunden ist.

Die Erfindung ist nicht auf die dargestellten Ausführungsbeispiele beschränkt. Vielmehr sind auch einzelne Merkmale der Ausführungsbeispiele vorteilhaft miteinander kombinierbar.

## Patentansprüche

1. Verfahren zum Wechseln von Gängen eines von einem hydrostatischen Getriebe angetriebenen Mehrganggetriebes mit folgenden Schritten:
- Ermitteln eines aktuell eingelegten Gangs (S1),
- Ermitteln eines Mindestwerts und eines Höchstwerts (S3) einer Geschwindigkeitskenngröße, welche jeweils mit dem eingelegten Gang assoziiert sind,
- Ermitteln eines Ist-Geschwindigkeitskenngrößenwerts (S4),
- Vergleichen des Ist-Geschwindigkeitskenngrößenwerts mit dem Mindestwert und dem Höchstwert (S5),
- Ermitteln eines Soll-Geschwindigkeitskenngrößenwerts (S6),
- Vergleichen des Ist-Geschwindigkeitskenngrößenwerts mit dem Soll-Geschwindigkeitskenngrößenwert (S7),
- Ermitteln eines weiteren Ist-Werts (S8),
- Ermitteln eines mit dem weiteren Ist-Wert assoziierten Schwellenwerts (S9),
- Vergleichen des weiteren Ist-Werts mit dem assoziierten Schwellenwert (S10),
- Ermitteln eines von
- dem Ist-Geschwindigkeitskenngrößenwert,
- dem Soll-Geschwindigkeitskenngrößenwert,
- einem Ergebnis des Vergleichs der Ist-Geschwindigkeit mit dem Mindestwert und dem Höchstwert und
- einem Ergebnis des Vergleichs des weiteren Ist-Werts mit dem assoziierten Schwellenwert abhängigen Schaltbefehls (S11), und
- Wechseln eines Ganges entsprechend dem Schaltbefehl (S13).

2. Verfahren nach Anspruch 1,
durch folgende Schritte **gekennzeichnet**:
- Ermitteln eines Fahrmodus (S2) und
- Ausführen des Ermittelns des Schaltbefehls (S11) entsprechend dem Fahrmodus.

3. Verfahren nach Anspruch 1 oder 2,
durch folgende Schritte **gekennzeichnet**:
- Verwenden einer Ist-Beschleunigung als weiterem Ist-Wert und
- Verwenden einer Mindest-Beschleunigung als assoziiertem Schwellewert
wenn:
- der Ist-Geschwindigkeitskenngrößenwert kleiner als der Mindestwert ist und
- der Ist-Geschwindigkeitskenngrößenwert kleiner als die Soll-Geschwindigkeit ist
und
- Erzeugen eines Herunterschaltbefehls als Schaltbefehl, wenn zudem:
- die Ist-Beschleunigung kleiner als die Mindest-Beschleunigung ist.

4. Verfahren nach Anspruch 1 oder 2,
durch folgende Schritte **gekennzeichnet**:
- Verwenden einer Ist-Übersetzung des hydrostatischen Getriebes als weiteren Ist-Wert und
- Verwenden einer Mindestübersetzung als assoziierten Schwellenwert
wenn:
- der Ist-Geschwindigkeitskenngrößenwert größer als der Höchstwert ist und
- der Ist-Geschwindigkeitskenngrößenwert kleiner als die Soll-Geschwindigkeit ist
und
- Erzeugen eines Hochschaltbefehls als Schaltbefehl,
wenn zudem:
- die Ist-Übersetzung größer als die Mindestübersetzung ist.

5. Steuergerät für ein hydrostatisch angetriebenes Mehrganggetriebe mit einer:
- Gangermittlungseinrichtung (E1) zum Ermitteln eines Aktuell eingelegten Gangs,
- Grenzwertermittlungseinrichtung (E3) zum Ermitteln eines Mindestwerts und eines Höchstwerts, welche jeweils mit dem eingelegten Gang assoziiert sind,
- Geschwindigkeitsermittlungseinrichtung (E4) zum Ermitteln eines Ist-Geschwindigkeitskenngrößenwerts,
- ersten Vergleichseinrichtung (E5) zum Vergleichen des Ist-Geschwindigkeitskenngrößenwerts, mit dem Mindestwert und dem Höchstwert,
- Vorgabeermittlungseinrichtung (E6) zum Ermitteln eines Soll-Geschwindigkeitskenngrößenwerts,
- zweiten Vergleichseinrichtung (E7) zum Vergleichen des Ist-Geschwindigkeitskenngrößenwerts mit dem Soll-Geschwindigkeitskenngrößenwert,
- Zustandsermittlungseinrichtung (E8) zum Ermitteln eines weiteren Ist-Werts,
- Schwellwertermittlungseinrichtung (E9) zum Ermitteln eines mit dem weiteren Ist-Wert assoziierten Schwellenwerts,
- dritten Vergleichseinrichtung (E10) zum Vergleichen des weiteren Ist-Werts mit dem assoziierten Schwellenwert,
- Befehlsermittlungseinrichtung (E11) zum Ermitteln eines von
- dem Ist-Geschwindigkeitskenngrößenwert,
- dem Soll-Geschwindigkeitskenngrößenwert,
- einem Ergebnis des Vergleichs der Ist-Geschwindigkeit mit dem Mindestwert und dem Höchstwert und
- einem Ergebnis des Vergleichs des weiteren Ist-Werts mit dem assoziierten Schwellenwert abhängigen Schaltbefehls, und
- Ausgabeeinrichtung (E12) zum Ausgeben des Schaltbefehls.

6. Steuergerät nach Anspruch 5,
mit einer
- Fahrmodusermittlungseinrichtung (E2) zum Ermitteln eines Fahrmodus,
wobei
- die Befehlsermittlungseinrichtung (E11) den Schaltbefehl entsprechend dem Fahrmodus ermittelt.

7. Steuergerät nach Anspruch 5 oder 6,
**dadurch gekennzeichnet, dass**
- die Zustandsermittlungseinrichtung (E8) eine Ist-Beschleunigung als weiteren Ist-Wert und
- die Schwellwertermittlungseinrichtung (E9) eine Mindest-Beschleunigung als assoziierten Schwellewert
verwenden, wenn:
- der Ist-Geschwindigkeitskenngrößenwert kleiner als der Mindestwert ist,
- der Ist-Geschwindigkeitskenngrößenwert kleiner als die Soll-Geschwindigkeit ist und
- die Ausgabeeinrichtung (E12) einen Herunterschaltbefehl als Schaltbefehl verwendet,
wenn zudem:
- die Ist-Beschleunigung kleiner als die Mindest-Beschleunigung ist.

8. Steuergerät nach Anspruch 5 oder 6,
**dadurch gekennzeichnet, dass**
- die Zustandsermittlungseinrichtung (E8) eine Ist-Übersetzung
als weiteren Ist-Wert und
- die Schwellwertermittlungseinrichtung (E9) eine Mindestübersetzung als assoziierten Schwellenwert
verwenden, wenn:
- der Ist-Geschwindigkeitskenngrößenwert größer als der Höchstwert ist und
- der Ist-Geschwindigkeitskenngrößenwert kleiner als die Soll-Geschwindigkeit ist und
- die Ausgabeeinrichtung (E12) eine Hochschaltbefehl als Schaltbefehl verwendet,
wenn zudem:
- die Ist-Übersetzung größer als die Mindestübersetzung ist.

## Claims

1. Process for changing gears in a multi-speed transmission driven by a hydrostatic gearbox, comprising the following steps:
- determining the gear currently selected (51),
- determining a minimum value and a maximum value (S3) of a speed characteristic, each associated with the gear selected,
- determining an actual speed characteristic value (S4),
- comparing the actual speed characteristic value with the minimum value and the maximum value (S5),
- determining a desired speed characteristic value (S6),
- comparing the actual speed characteristic value with the desired speed characteristic value (S7),
- determining a further actual value (S8),
- determining a threshold value (S9) associated with the further actual value,
- comparing the further actual value with the associated threshold value (S10),
- determining a gear-change command (S11) that is dependent on
- the actual speed characteristic value,
- the desired speed characteristic value,
- a result of the comparison of the actual speed with the minimum value and the maximum value and
- a result of the comparison of the further actual value with the associated threshold value,
and
- changing a gear in accordance with the gear-change command (S13).

2. Process according to claim 1, **characterised by** the following steps:
- determining a drive mode (S2) and
- executing the determination of the gear-change command (S11) in accordance with the drive mode.

3. Process according to claim 1 or 2, **characterised by** the following steps:
- using an actual acceleration as a further actual value and
- using a minimum acceleration as an associated threshold value
when:
- the actual speed characteristic value is less than the minimum value and
- the actual speed characteristic value is less than the desired speed
and
- generating a change-down command as the gear-change command if additionally:
- the actual acceleration is less than the minimum acceleration.

4. Process according to claim 1 or 2, **characterised by** the following steps:
- using an actual gear ratio of the hydrostatic gearbox as a further actual value and
- using a minimum gear ratio as an associated threshold value
when:
- the actual speed characteristic value is greater than the maximum value and
- the actual speed characteristic value is less than the desired speed
and
- generating a change-up command as the gear-change command if additionally:
- the actual gear ratio is greater than the minimum gear ratio.

5. Control apparatus for a hydrostatically driven multi-gear transmission, having a:
- gear determining device (E1) for determining a gear currently selected,
- limit determining device (E3) for determining a minimum value and a maximum value each of which is associated with the gear selected,
- speed determining device (E4) for determining an actual speed characteristic value,
- first comparison device (E5) for comparing the actual speed characteristic value with the minimum value and the maximum value,
- preset determining device (E6) for determining a desired speed characteristic value,
- second comparison device (E7) for comparing the actual speed characteristic value with the desired speed characteristic value,
- status determining device (E8) for determining a further actual value,
- threshold determining device (E9) for determining a threshold value associated with the further actual value,
- third comparison device (E10) for comparing the further actual value with the associated threshold value,
- command determining device (E11) for determining a gear-change command dependent on
- the actual speed characteristic value,
- the desired speed characteristic value,
- a result of the comparison of the actual speed with the minimum value and the maximum value and
- a result of the comparison of the further actual value with the associated threshold value,
and
- output device (E12) for outputting the gear-change command.

6. Control apparatus according to claim 5, having a
- drive mode determining device (E2) for determining a drive mode,
wherein
- the command determining device (E11) determines the gear-change command corresponding to the drive mode.

7. Control apparatus according to claim 5 or 6,
**characterised in that**
- the status determining device (E8) uses an actual acceleration as a further actual value and
- the threshold determining device (E9) uses a minimum acceleration as the associated threshold value, when:
- the actual speed characteristic value is less than the minimum value,
- the actual speed characteristic value is less than the desired speed and
- the output device (E12) uses a change-down command as the gear-change command,
if additionally:
- the actual acceleration is less than the minimum acceleration.

8. Control apparatus according to claim 5 or 6, **characterised In that**
- the status determining device (E8) uses an actual gear ratio as a further actual value and
- the threshold determining device (E9) uses a minimum gear ratio as an associated threshold value, when:
- the actual speed characteristic value is greater than the maximum value and
- the actual speed characteristic value is less than the desired speed and
- the output device (E12) uses a change-up command as the gear-change command,
when additionally:
- the actual gear ratio is greater than the minimum gear ratio.

## Revendications

1. Procédé de changement de vitesses d'une boîte à plusieurs vitesses entraînée par une boîte de vitesses hydrostatique, comprenant les étapes suivantes :
- détermination de la vitesse actuellement engagée (S1),
- détermination d'une valeur minimale et d'une valeur maximale (S3) d'une grandeur caractéristique de vélocité qui sont respectivement associées à la vitesse engagée,
- détermination d'une grandeur caractéristique de vélocité effective (S4),
- comparaison de la grandeur caractéristique de vélocité effective avec la valeur minimale et la valeur maximale (S5),
- détermination d'une grandeur caractéristique de vélocité de consigne (S6),
- comparaison de la grandeur caractéristique de vélocité effective avec la grandeur caractéristique de vélocité de consigne (S7),
- détermination d'une autre valeur effective (S8),
- détermination d'une valeur de seuil (S9) associée à l'autre valeur effective,
- comparaison de l'autre valeur effective avec la valeur de seuil (S10) associée,
- détermination d'un ordre de passage de vitesses (S11) dépendant
- de la grandeur caractéristique de vélocité effective,
- de la grandeur caractéristique de vélocité de consigne,
- d'un résultat de la comparaison de la vélocité effective avec la valeur minimale et la valeur maximale et
- d'un résultat de la comparaison de l'autre valeur effective avec la valeur de seuil associée, et
- changement d'une vitesse en fonction de l'ordre de passage de vitesses (S13).

2. Procédé selon la revendication 1,
**caractérisé par** les étapes suivantes :
- détermination d'un mode de conduite (S2) et
- exécution de la détermination de l'ordre de passage de vitesses (S11) en fonction du mode de conduite.

3. Procédé selon la revendication 1 ou 2, **caractérisé par** les étapes suivantes :
- utilisation d'une accélération effective en tant qu'autre valeur effective et
- utilisation d'une accélération minimale en tant que valeur de seuil associée
quand :
- la grandeur caractéristique de vélocité effective est inférieure à la valeur minimale et quand
- la grandeur caractéristique de vélocité effective est inférieure à la vélocité de consigne
et
- production d'un ordre de descente de vitesses en tant qu'ordre de passage de vitesses quand en plus :
- l'accélération effective est inférieure à l'accélération minimale.

4. Procédé selon la revendication 1 ou 2, **caractérisé par** les étapes suivantes :
- utilisation d'un rapport effectif de la boîte de vitesses hydrostatique en tant qu'autre valeur effective et
- utilisation d'un rapport minimal en tant que valeur de seuil associée
quand :
- la grandeur caractéristique de vélocité effective est supérieure à la valeur maximale et quand
- la grandeur caractéristique de vélocité effective est inférieure à la vélocité de consigne
et
- production d'un ordre de montée de vitesses en tant qu'ordre de passage de vitesses quand en plus
- le rapport effectif est supérieur au rapport minimal.

5. Appareil de commande pour une boîte à plusieurs vitesses entraînée de façon hydrostatique, avec :
- un équipement de détermination de vitesse (E1) pour la détermination d'une vitesse engagée actuellement,
- un équipement de détermination de valeur limite (E3) pour la détermination d'une valeur minimale et d'une valeur maximale qui sont respectivement associées à la vitesse engagée,
- un équipement de détermination de vélocité (E4) pour la détermination d'une grandeur caractéristique de vélocité effective,
- un premier équipement de comparaison (E5) pour la comparaison de la grandeur caractéristique de vélocité effective avec la valeur minimale et la valeur maximale,
- un équipement de détermination de paramètre (E6) pour la détermination d'une grandeur caractéristique de vélocité de consigne,
- un deuxième équipement de comparaison (E7) pour la comparaison de la grandeur caractéristique de vélocité effective avec la grandeur caractéristique de vélocité de consigne,
- un équipement de détermination d'état (E8) pour la détermination d'une autre valeur effective,
- un équipement de détermination de valeur de seuil (E9) pour la détermination d'une valeur de seuil associée à l'autre valeur effective,
- un troisième équipement de comparaison (E10) pour la comparaison de l'autre valeur effective avec la valeur de seuil associée,
- un équipement de détermination d'ordre (E11) pour la détermination d'un ordre de passage de vitesses dépendant
- de la grandeur caractéristique de vélocité effective,
- de la grandeur caractéristique de vélocité de consigne,
- d'un résultat de la comparaison de la vélocité effective avec la valeur minimale et la valeur maximale,
- d'un résultat de la comparaison de l'autre valeur effective avec la valeur de seuil associée, et
- un équipement de sortie (E12) pour la sortie de l'ordre de passage de vitesses.

6. Appareil de commande selon la revendication 5, avec
- un équipement de détermination de mode de conduite (E2) pour la détermination d'un mode de conduite,
- l'équipement de détermination d'ordre (E11) déterminant l'ordre de passage de vitesses en fonction du mode de conduite.

7. Appareil de commande selon la revendication 5 ou 6, **caractérisé en ce que**
- l'équipement de détermination d'état (E8) utilise une accélération effective en tant qu'autre valeur effective et **en ce que**
- l'équipement de détermination de valeur de seuil (E9) utilise une accélération minimale en tant que valeur de seuil associée quand :
- la grandeur caractéristique de vélocité effective est inférieure à la valeur minimale et
quand
- la grandeur caractéristique de vélocité effective est inférieure à la vélocité de consigne, et
- l'équipement de sortie (E12) utilise un ordre de descente de vitesses en tant qu'ordre de passage de vitesses
quand en plus :
- l'accélération effective est inférieure à l'accélération minimale.

8. Appareil de commande selon la revendication 5 ou 6,
**caractérisé en ce que**
- l'équipement de détermination d'état (E8) utilise un rapport effectif
en tant qu'autre valeur effective et
- l'équipement de détermination de valeur de seuil (E9) utilise un rapport minimal en tant que valeur de seuil associée quand :
- la grandeur caractéristique de vélocité effective est supérieure à la valeur maximale et quand
- la grandeur caractéristique de vélocité effective est inférieure à la vélocité de consigne, et
- l'équipement de sortie (E12) utilise un ordre de montée de vitesses en tant qu'ordre de passage de vitesses
quand en plus :
- le rapport effectif est supérieur au rapport minimal.
